(19) **Europäisches Patentamt / European Patent Office / Office européen des brevets**

(11) **EP 3 446 149 B1**

(12) **FASCICULE DE BREVET EUROPEEN**

(45) Date de publication et mention
de la délivrance du brevet:
**07.07.2021 Bulletin 2021/27**

(21) Numéro de dépôt: **17717201.2**

(22) Date de dépôt: **19.04.2017**

(51) Int Cl.:
*G01S 13/78* (2006.01)     *G01S 7/288* (2006.01)

(86) Numéro de dépôt international:
**PCT/EP2017/059246**

(87) Numéro de publication internationale:
**WO 2017/182501 (26.10.2017 Gazette 2017/43)**

(54) **PROCÉDÉ ET DISPOSITIF DE DÉTECTION DE MESSAGES MODE S ÉMIS PAR DES AÉRONEFS, SATELLITE COMPORTANT UN TEL DISPOSITIF DE DÉTECTION**

VERFAHREN UND VORRICHTUNG ZUR ERKENNUNG VON S-MODUS-NACHRICHTEN, DIE VON EINEM FLUGZEUG GESENDET WERDEN, UND SATELLIT MIT SOLCH EINER VORRICHTUNG

METHOD AND DEVICE FOR DETECTING MODE S MESSAGES EMITTED BY AIRCRAFT, SATELLITE INCLUDING SUCH A DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2016 FR 1653440**

(43) Date de publication de la demande:
**27.02.2019 Bulletin 2019/09**

(73) Titulaire: **Airbus Defence and Space SAS
31402 Toulouse Cedex 4 (FR)**

(72) Inventeurs:
• **PICARD, Mathieu
31400 TOULOUSE (FR)**
• **ELFASSI, Adrien
31400 TOULOUSE (FR)**

(74) Mandataire: **Ipside
6, Impasse Michel Labrousse
31100 Toulouse (FR)**

(56) Documents cités:
EP-A1- 2 296 128     EP-A2- 2 738 972
WO-A1-2005/085898    FR-A1- 2 946 482
US-A1- 2004 233 095  US-A1- 2014 004 791

• BLOMENHOFER H ET AL: "Space-based Automatic Dependent Surveillance Broadcast (ADS-B) payload for In-Orbit Demonstration", ADVANCED SATELLITE MULTIMEDIA SYSTEMS CONFERENCE (ASMS) AND 12TH SIGNAL PROCESSING FOR SPACE COMMUNICATIONS WORKSHOP (SPSC), 2012 6TH, IEEE, 5 septembre 2012 (2012-09-05), pages 160-165, XP032393854, DOI: 10.1109/ASMS-SPSC.2012.6333069 ISBN: 978-1-4673-2676-6

**EP 3 446 149 B1**

**Description**

## DOMAINE TECHNIQUE

La présente invention appartient au domaine de la surveillance d'aéronefs, et concerne plus particulièrement la détection de messages Mode S émis par des aéronefs, en particulier des messages 1090 ES (Mode S en squitter étendu ou « Mode S extended squitter » dans la littérature anglo-saxonne) émis dans le contexte de systèmes de surveillance ADS-B (« Automatic Dépendent Surveillance-Broadcast »).

La présente invention trouve une application particulièrement avantageuse, bien que nullement limitative dans le cas où plusieurs messages Mode S d'aéronefs différents sont susceptibles d'être reçus simultanément.

## ÉTAT DE LA TECHNIQUE

Actuellement, les aéronefs émettent des messages Mode S qui sont reçus par des stations réceptrices au sol. Le nombre d'aéronefs susceptibles d'être présents, à un instant donné, dans la zone géographique desservie par une station réceptrice au sol est généralement assez limité. Par conséquent, la probabilité de collision entre messages Mode S émis par des aéronefs différents, c'est-à-dire la probabilité pour qu'au moins deux messages Mode S soient reçus en même temps par une station réceptrice au sol, est assez faible.

Cependant, il est envisagé de nos jours d'effectuer la réception de messages Mode S émis par des aéronefs, en particulier des messages 1090 ES, au moyen de satellites en orbite basse (« Low Earth Orbit » ou LEO dans la littérature anglo-saxonne) ou en orbite moyenne (« Médium Earth Orbit » ou MEO dans la littérature anglo-saxonne).

Du fait de son positionnement à une altitude élevée par rapport aux altitudes de vol des aéronefs, un tel satellite est adapté à desservir une zone géographique de dimensions beaucoup plus importantes que celles d'une zone géographique desservie par une station réceptrice au sol.

La zone géographique desservie par un satellite est donc susceptible d'être survolée, à un instant donné, par un nombre d'aéronefs beaucoup plus important qu'une zone géographique desservie par une station réceptrice au sol. Il en résulte que la probabilité de collision au niveau d'un satellite est supérieure à la probabilité de collision au niveau d'une station réceptrice au sol.

La probabilité de collision au niveau d'un satellite peut en outre être très élevée (de l'ordre de 50% ou davantage), et ce d'autant plus qu'un même aéronef est susceptible d'émettre un grand nombre de messages Mode S sur des intervalles de temps relativement courts. Par exemple, un même aéronef émet des messages 1090 ES de manière récurrente avec une période moyenne de 0.5 secondes (en pratique comprise entre 0.4 et 0.6 secondes).

La probabilité de collision étant généralement assez faible dans le cas d'une station réceptrice au sol, le protocole de communication Mode S n'a pas été conçu pour permettre de distinguer facilement des messages Mode S reçus en même temps, mais principalement pour permettre la détection et le décodage des messages Mode S avec des moyens à la fois simples et robustes, exploitant de simples mesures de puissance.

Toutefois, de tels moyens de détection et de décodage conventionnels ne permettent pas de détecter des messages Mode S dès lors qu'au moins deux messages Mode S sont reçus simultanément, et ne sont donc pas adaptés à la collecte de messages Mode S par un satellite, ou dans le cas d'une station réceptrice au sol desservant une zone géographique dense, comme par exemple un aéroport.

La demande de brevet WO 2005/085898 est consacrée à la détermination de valeurs de bits dans un train d'impulsions radar échantillonné à un débit binaire plus élevé qu'un échantillon par bit.

Cette divulgation porte sur le décodage de messages Mode S préalablement détectés, mais ne concerne pas la détection de tels messages.

Le document EP 2738972 A2 décrit un récepteur radio recevant des signaux ADS-B modulés en positions d'impulsions (modulation PPM, pour Pulse Position Modulation), précédés de préambules d'impulsions conformes à un protocole ADS-B. Le récepteur peut déterminer qu'une séquence d'impulsions correspond à une séquence attendue de préambule, par filtrage numérique fondé sur une première ou une seconde moitié de cette séquence de préambule.

Des améliorations sont toutefois possibles dans la détection des messages Mode S en présence de collisions.

## EXPOSÉ DE L'INVENTION

La présente invention a pour objectif de remédier à tout ou partie des limitations des solutions de l'art antérieur, notamment celles exposées ci-avant, en proposant une solution qui permette d'améliorer la capacité de détection de messages Mode S en présence de collisions.

A cet effet, et selon un premier aspect, l'invention concerne un procédé de détection de messages Mode S dans un signal global mesuré dans une bande de fréquences d'émission de messages Mode S par des aéronefs, comportant l'obtention, à partir du signal global, d'un signal comportant deux voies en quadrature de phase, dit « signal IQ », et la sélection d'une ou de plusieurs fréquences candidates pour la détection d'un message Mode S. Ledit procédé comportant en outre, pour chaque fréquence candidate :

- le recalage fréquentiel du signal IQ avec un signal de référence en fonction de la fréquence candidate considérée, ledit signal de référence comportant, sur une durée Ts d'un symbole d'un message Mode S, une première partie sur laquelle ledit signal de référence est de polarité constante, et une seconde partie sur laquelle ledit signal de référence est de polarité constante opposée à la polarité dudit signal de référence sur la première partie,
- la corrélation du signal IQ par le signal de référence de sorte à obtenir un signal corrélé pour la fréquence candidate considérée,
- le calcul de valeurs d'un signal de détection associées respectivement à plusieurs instants candidats pour la détection d'un message Mode S, la valeur du signal de détection pour un instant candidat étant calculée en fonction de valeurs du signal corrélé à des instants tels que l'écart entre chacun desdits instants et l'instant candidat considéré est un multiple de la durée Ts,

un message Mode S étant détecté lorsqu'une valeur du signal de détection vérifie un critère prédéterminé de détection.

Ainsi, le procédé de détection repose notamment sur l'obtention d'un signal IQ à partir du signal global, c'est-à-dire une représentation complexe du signal global en amplitude et en phase. Grâce à un tel signal IQ, qui préserve l'information de phase du signal global là où les procédés de détection selon l'art antérieur ne conservaient que l'information d'amplitude/puissance, il est possible d'améliorer les performances de détection en cas de collision de messages Mode S émis par des aéronefs différents.

En particulier, il est alors possible d'exploiter la dimension fréquentielle pour distinguer des messages Mode S reçus en même temps. En effet, bien que les messages Mode S soient théoriquement tous émis sur la fréquence 1090 MHz, il s'avère en pratique que la fréquence réelle sur laquelle est reçu un message Mode S peut être différente de 1090 MHz et varier légèrement d'un message Mode S à un autre. Notamment, l'imprécision tolérée pour la génération de la fréquence 1090 MHz étant de l'ordre de $\pm$ 1 MHz, la fréquence réelle sur laquelle est émis un message Mode S est en pratique comprise entre 1089 MHz et 1091 MHz. En outre, la fréquence réelle sur laquelle un message Mode S est reçu peut, par effet Doppler, différer de la fréquence sur laquelle ledit message Mode S a été émis. En particulier, dans le cas où ce message Mode S est reçu par un satellite en orbite LEO, la variation fréquentielle introduite par effet Doppler peut être de l'ordre de $\pm$ 25 kHz.

Ces perturbations, à savoir l'imprécision sur la génération de la fréquence 1090 MHz et/ou l'effet Doppler deviennent cependant avantageuses dans un contexte de collisions dans la mesure où elles introduisent une diversité fréquentielle susceptible de permettre de distinguer des messages Mode S reçus en même temps. Il est par conséquent possible de considérer plusieurs fréquences candidates pour la détection d'un message Mode S, autour de la fréquence 1090 MHz théorique d'émission des messages Mode S.

La détection comporte alors, pour chaque fréquence candidate, le recalage fréquentiel du signal IQ avec un signal de référence, et la corrélation dudit signal IQ par ledit signal de référence. La forme du signal de référence est telle que le signal corrélé comporte un maximum local ou un minimum local lorsque le signal de référence est synchronisé avec un symbole d'un message Mode S. Par conséquent, la présence d'un message Mode S dans le signal IQ doit en principe entraîner la présence, dans le signal corrélé, de maxima locaux/minima locaux espacés de la durée Ts.

La détection comporte alors le calcul, pour chaque fréquence candidate, d'un signal de détection dont les valeurs sont représentatives de la présence ou non de maxima locaux/minima locaux espacés de la durée Ts à partir de différents instants candidats, à partir duquel il est possible de détecter la présence d'un message Mode S sur la fréquence candidate considérée.

Dans des modes particuliers de mise en œuvre, le procédé de détection de messages Mode S peut comporter en outre l'une ou plusieurs des caractéristiques suivantes, prises isolément ou selon toutes les combinaisons techniquement possibles.

Dans des modes particuliers de mise en œuvre, la sélection de fréquences candidates comporte l'analyse d'un spectre fréquentiel du signal IQ, une fréquence candidate correspondant à une fréquence pour laquelle la valeur du spectre fréquentiel du signal IQ vérifie un critère prédéterminé de détection.

Dans des modes particuliers de mise en œuvre, le procédé de détection de messages Mode S comporte un recalage en phase du signal IQ avec le signal de référence en fonction d'au moins une phase candidate pour la détection d'un message Mode S.

Dans des modes particuliers de mise en œuvre, les fréquences candidates sont des fréquences choisies arbitrairement et le signal de détection correspond à une fonction sur un espace bidimensionnel dont les dimensions correspondent respectivement aux fréquences candidates et aux instants candidats, ou à une fonction sur un espace tridimensionnel dont les dimensions correspondent respectivement aux fréquences candidates, aux instants candidats et à des phases candidates.

Dans des modes particuliers de mise en œuvre, le signal de référence est constant au cours de la première partie, égal à une valeur V1, et est constant au cours de la seconde partie, égal à une valeur V2 telle que V2 = - V1.

Dans des modes particuliers de mise en œuvre, la première partie et la seconde partie sont toutes deux de durée égale à Ts/2.

Dans des modes particuliers de mise en œuvre, les messages Mode S à détecter correspondent à des messages 1090 ES.

Dans des modes particuliers de mise en œuvre, le procédé de détection de messages Mode S comporte l'extraction de bits inclus dans chaque message Mode S détecté.

Dans des modes particuliers de mise en œuvre, chaque message Mode S comportant des bits de données et des bits de détection d'erreur, l'extraction de bits d'un message Mode S détecté comporte une étape d'extraction initiale de bits et de calcul d'une valeur de confiance pour chaque bit de données extrait, et comporte en outre les étapes suivantes qui sont itérées jusqu'à ce qu'un critère prédéterminé d'arrêt soit vérifié :

- calcul, à partir des bits de données extraits, de bits de détection d'erreur théoriques,
- comparaison des bits de détection d'erreur théoriques avec les bits de détection d'erreur extraits du message Mode S détecté,
- lorsque les bits de détection d'erreur théoriques sont différents des bits de détection d'erreur extraits : modification d'au moins le bit extrait présentant la plus faible valeur de confiance parmi les bits extraits qui n'ont pas encore été modifiés.

Dans des modes particuliers de mise en œuvre, l'extraction des bits inclus dans chaque message Mode S détecté est réalisée de manière conjointe pour l'ensemble des messages Mode S détectés.

Dans des modes particuliers de mise en œuvre, chaque message Mode S comportant des bits de données et des bits de détection d'erreur, l'extraction de bits comporte les étapes suivantes qui sont itérées jusqu'à ce qu'un critère prédéterminé d'arrêt soit vérifié :

- extraction de bits pour chaque message Mode S détecté présent dans le signal IQ,
- calcul, pour chaque message Mode S, de bits de détection d'erreur théoriques à partir des bits de données extraits,
- comparaison, pour chaque message Mode S, des bits de détection d'erreur théoriques avec les bits de détection d'erreur extraits, les bits extraits pour un message Mode S étant considérés comme corrects lorsque les bits de détection d'erreur théoriques sont égaux aux bits de détection d'erreur extraits et comme erronés lorsque les bits de détection d'erreur théoriques sont différents des bits de détection d'erreur extraits,
- lorsque les bits extraits sont corrects pour au moins un message Mode S et erronés pour au moins un autre message Mode S :

  o reformation de chaque message Mode S pour lequel les bits extraits sont corrects, à partir desdits bits extraits,
  o suppression de chaque message Mode S reformé de sorte à obtenir un signal IQ dépourvu des messages Mode S pour lesquels les bits extraits sont corrects.

Selon un second aspect, la présente invention concerne un produit programme d'ordinateur comportant un ensemble d'instructions de code de programme qui, lorsqu'elles sont exécutées par un processeur, configurent ledit processeur pour mettre en œuvre un procédé de détection de messages Mode S selon l'un quelconque des modes de mise en œuvre de l'invention.

Selon un troisième aspect, la présente invention concerne un dispositif de détection de messages Mode S dans un signal global mesuré dans une bande de fréquences d'émission de messages Mode S par des aéronefs, comportant des moyens configurés pour mettre en œuvre les étapes d'un procédé de détection de messages Mode S selon l'un quelconque des modes de mise en œuvre de l'invention.

Selon un quatrième aspect, la présente invention concerne un satellite comportant un dispositif de mesure d'un signal global mesuré dans une bande de fréquences d'émission de messages Mode S par des aéronefs, et un dispositif de détection de messages Mode S l'un quelconque des modes de réalisation de l'invention.

Selon un cinquième aspect, la présente invention concerne un système de détection de messages Mode S, comportant un satellite comportant un dispositif de mesure d'un signal global mesuré dans une bande de fréquences d'émission de messages Mode S par des aéronefs, ledit système comportant en outre des moyens, répartis entre ledit satellite et une ou plusieurs stations de traitement au sol, configurés pour mettre en œuvre les étapes d'un procédé de détection de messages Mode S selon l'un quelconque des modes de mise en œuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de détection de messages Mode S,
- Figure 2 : un diagramme illustrant les principales étapes d'un exemple de mise en œuvre d'un procédé de détection de messages Mode S,
- Figure 3 : une représentation temporelle d'un exemple de signal de référence pour la détection de messages Mode S,
- Figure 4 : des représentations temporelles représentant le résultat d'une corrélation de symboles de messages Mode S par le signal de référence illustré par la figure 3,
- Figure 5 : un diagramme illustrant les principales étapes d'un premier mode particulier de mise en œuvre d'une étape d'extraction de bits de messages Mode S détectés,
- Figure 6 : un diagramme illustrant les principales étapes d'un second mode particulier de mise en œuvre d'une étape d'extraction de bits de messages Mode S détectés.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

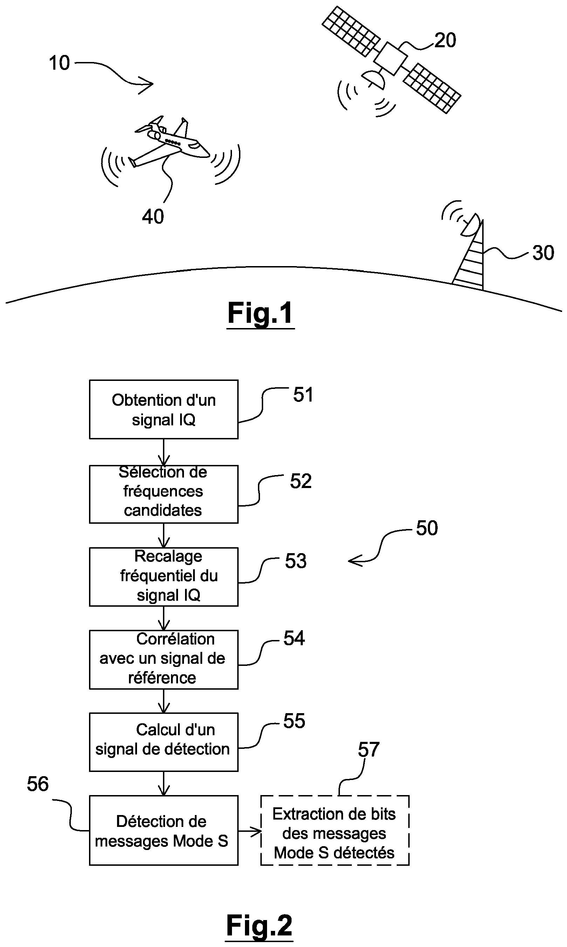

La figure 1 représente schématiquement un exemple de réalisation d'un système 10 de détection de messages Mode S émis par des aéronefs 40.

Tel qu'illustré par la figure 1, le système 10 de détection comporte au moins un satellite 20 et au moins une station 30 de traitement au sol. Le satellite 20 est de préférence placé sur une orbite non-géosynchrone, telle qu'une orbite LEO ou une orbite MEO.

Le satellite 20 comporte un dispositif de mesure (non représenté sur les figures) adapté à mesurer un signal global dans une bande de fréquences d'émission de messages Mode S par des aéronefs 40, c'est-à-dire une bande de fréquences comportant la fréquence 1090 MHz qui correspond à la fréquence théorique d'émission desdits messages Mode S par les aéronefs 40.

De manière générale, le système 10 de détection comporte des moyens, répartis entre ledit satellite 20 et une ou plusieurs stations 30 de traitement au sol, configurés pour mettre en œuvre les étapes d'un procédé 50 de détection de messages Mode S, de préférence des messages 1090 ES, qui sera décrit ci-après. En d'autres termes, suivant le mode de réalisation considéré :

- toutes les étapes du procédé 50 de détection sont mises en œuvre par le satellite 20, auquel cas la station 30 de traitement au sol se contente de recevoir dudit satellite 20 le résultat de la détection,
- toutes les étapes du procédé 50 de détection sont mises en œuvre par une ou plusieurs stations 30 de traitement au sol, auquel cas le satellite 20 se contente de transmettre à une station 30 de traitement au sol le signal global mesuré,
- le satellite 20 met en œuvre une partie des étapes du procédé 50 de détection, et la ou les étapes non mises en œuvre par le satellite 20 sont mises en œuvre par une ou plusieurs stations 30 de traitement au sol.

Dans la suite de la description, on se place de manière non limitative dans le cas où toutes les étapes du procédé 50 de détection sont mises en œuvre par un dispositif de détection (non représenté sur les figures) embarqué dans le satellite 20.

Le dispositif de détection comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 de détection de messages Mode S. Alternativement ou en complément, le dispositif de détection peut comporter un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé de détection de messages Mode S.

En d'autres termes, le dispositif de détection est configuré de façon logicielle (produit programme d'ordinateur spécifique) et/ou matérielle (FPGA, PLD, ASIC, composants électroniques discrets, etc.) pour mettre en œuvre les différentes étapes du procédé 50 de détection de messages Mode S.

La figure 2 représente les principales d'un exemple de mise en œuvre d'un procédé 50 de détection de messages Mode S.

Tel qu'illustré par la figure 2, le procédé 50 de détection comporte tout d'abord une étape 51 d'obtention, à partir du signal global, d'un signal comportant deux voies en quadrature de phase, dit « signal IQ », et une étape 52 de sélection d'une ou de plusieurs fréquences candidates pour la détection d'un message Mode S. Le procédé 50 de détection comporte ensuite, pour chaque fréquence candidate, des étapes de :

- 53 recalage fréquentiel du signal IQ avec un signal de référence en fonction de la fréquence candidate considérée,
- 54 corrélation du signal IQ par le signal de référence de sorte à obtenir un signal corrélé pour la fréquence candidate considérée,
- 55 calcul de valeurs d'un signal de détection en fonction du signal corrélé.

Le procédé 50 de détection de messages Mode S comporte également une étape 56 de détection d'un message Mode S lorsqu'une valeur du signal de détection vérifie un critère prédéterminé de détection.

Il est à noter que le procédé 50 de détection peut se contenter de détecter les messages Mode S, sans extraire les bits inclus dans les messages Mode S détectés. Dans des modes préférés de mise en œuvre, et tel qu'illustré par la figure 2, le procédé 50 de détection peut cependant comporter une étape 57 d'extraction des bits inclus dans les messages Mode S détectés.

On décrit à présent des exemples non limitatifs de mise en œuvre des différentes étapes du procédé 50 de détection de messages Mode S.

A) Etape 51 d'obtention de signal IQ

L'étape 51 d'obtention de signal IQ peut mettre en œuvre toute méthode connue de l'homme de l'art permettant d'obtenir deux voies I et Q en quadrature de phase. Le signal IQ est par exemple un signal dans lequel la fréquence 1090 MHz d'émission des messages Mode S a été ramenée sur une fréquence F0 qui correspond à la fréquence nulle (bande de base) ou à une fréquence intermédiaire non nulle prédéterminée.

En considérant que K messages Mode S sont présents dans le signal global, reçus d'aéronefs différents, alors le signal IQ est de préférence un signal numérique qui peut par exemple être exprimé sous la forme suivante :

$$r[n] = \sum_{k=1}^{K} A_k \cdot s_k\left(\frac{n}{Fs} - t_k\right) \cdot e^{j\cdot\left(2\pi f_k \frac{n}{Fs} + \varphi_k\right)} + b[n] \qquad (1)$$

expression dans laquelle :

- Fs correspond à la fréquence d'échantillonnage du signal IQ,
- r[n] correspond au signal IQ à l'instant n/Fs,
- $S_k$ correspond au message Mode S reçu de l'aéronef de rang k, $1 \leq k \leq K$,
- $A_k$ correspond à l'amplitude du message Mode S $S_k$,
- $t_k$ correspond à l'instant de début de réception du message Mode S $S_k$,
- $f_k$ correspond à la fréquence réelle sur laquelle est reçu le message Mode S $S_k$, ramenée autour de la fréquence F0,
- $\varphi_k$ correspond à la phase du message Mode S $S_k$,
- b[n] correspond à un bruit de mesure à l'instant n/Fs.

B) Sélection 52 de fréquences candidates

L'étape 52 de sélection de fréquences candidates vise à sélectionner les fréquences sur lesquelles il va être vérifié si un message Mode S a été reçu, afin d'estimer les fréquences réelles $f_k$.

Suivant un premier exemple, l'étape 52 de sélection de fréquences candidates peut consister en un choix arbitraire de fréquences autour de la fréquence F0, par exemple espacées d'un pas fréquentiel ∆F prédéterminé.

Dans des modes préférés de mise en œuvre, l'étape 52 de sélection comporte l'analyse d'un spectre fréquentiel du signal IQ, et une fréquence candidate correspond à une fréquence pour laquelle la valeur du spectre fréquentiel du signal IQ vérifie un critère prédéterminé de détection. En d'autres termes, les fréquences candidates sont des fréquences qui, d'après le spectre fréquentiel du signal IQ, sont susceptibles de comporter un message Mode S.

Par exemple, le spectre fréquentiel du signal IQ, en une fréquence f, est calculé par une transformée de Fourier discrète du signal IQ :

$$D_{freq}[f] = \frac{1}{\sqrt{Ns}} \sum_{n=0}^{Ns-1} r[n] \cdot e^{-j2\pi f \frac{n}{Fs}} \qquad (2)$$

expression dans laquelle Ns correspond au nombre d'échantillons du signal IQ r[n], $0 \le n \le Ns-1$. On comprend cependant qu'il est possible de considérer, de manière plus générale, toute méthode de calcul d'un spectre fréquentiel connue de l'homme de l'art.

En considérant le spectre fréquentiel $D_{freq}$ donné par l'expression (2) ci-dessus, le critère prédéterminé de détection est par exemple vérifié, pour la fréquence $fe_k$, si la valeur $|D_{freq}[fe_k]|^2$ correspond à un maximum local et si :

$$|D_{freq}[fe_k]|^2 > L$$

expression dans laquelle L correspond à une valeur seuil positive prédéterminée. Si le critère prédéterminé de détection est vérifié pour la fréquence $fe_k$, alors cela signifie que le signal IQ est susceptible de comporter un message Mode S sur la fréquence $fe_k$ qui est sélectionnée comme fréquence candidate. Le cas échéant, la phase de la valeur $D_{freq}[fe_k]$ correspond à une estimation $\varphi e_k$ de la phase dudit message Mode S détecté, dite « phase candidate » dudit message Mode S détecté.

En pratique, le spectre fréquentiel Dfreq est de préférence calculé pour un ensemble de fréquences prédéterminées, dites « fréquences d'analyse ». Le cas échéant, une fréquence candidate sélectionnée correspond à l'une des fréquences d'analyse. Il est cependant possible, dans des modes particuliers de mise en œuvre, d'effectuer une interpolation du spectre fréquentiel $|D_{freq}|^2$ au voisinage d'une fréquence d'analyse ayant permis de vérifier le critère prédéterminé de détection. De telles dispositions permettent d'améliorer la précision de la sélection des fréquences candidates. L'interpolation du spectre fréquentiel $|D_{freq}|^2$ repose par exemple sur une fonction polynomiale d'ordre 2.

C) Etape 53 de recalage fréquentiel

Pour chaque fréquence candidate sélectionnée, le procédé 50 de détection comporte alors une étape 53 au cours de laquelle le signal IQ est recalé en fréquences avec un signal de référence, en fonction de la fréquence candidate considérée. Par « recalage fréquentiel », on entend que le signal IQ et le signal de référence sont ramenés sur la même fréquence.

Dans la suite de la description, on se place de manière non limitative dans le cas où le recalage fréquentiel, pour une fréquence candidate $fe_k$, correspond à ramener en bande de base un message Mode S reçu sur ladite fréquence candidate $fe_k$, c'est-à-dire à ramener ledit message Mode S sur la fréquence nulle. Pour la fréquence candidate $fe_k$, le signal IQ est par exemple recalé en fréquences selon l'expression suivante :

$$re_k[n] = r[n] \cdot e^{-j2\pi fe_k \frac{n}{Fs}} \qquad (3)$$

De préférence, si l'étape 52 de sélection de fréquences candidates a également fourni une phase candidate $\varphi e_k$ du message Mode S détecté sur la fréquence candidate $fe_k$, le signal IQ est recalé selon l'expression suivante

$$re_k[n] = r[n] \cdot e^{-j \cdot \left(2\pi fe_k \frac{n}{Fs} + \varphi e_k\right)} \qquad (4)$$

En d'autres termes, le signal IQ est également recalé en phase avec le signal de référence en fonction de la phase candidate $\varphi e_k$.

De manière plus générale, si les phases candidates n'ont pas été obtenues au cours de l'étape 52 de sélection de fréquences candidates, par exemple du fait que les fréquences candidates sont des fréquences choisies arbitrairement autour de la fréquence F0, il est possible de considérer plusieurs phases candidates pour chaque fréquence candidate, et de déterminer plusieurs signaux IQ recalés en phase pour chaque fréquence candidate, en fonction des différentes phases candidates sélectionnées.

D) Etape 54 de corrélation avec le signal de référence

Après recalage fréquentiel en fonction d'une fréquence candidate, le signal IQ est corrélé avec un signal de référence. La corrélation effectuée est une corrélation glissante, c'est-à-dire que le signal corrélé comporte, pour la fréquence candidate considérée, plusieurs valeurs associées respectivement à différentes positions du signal de référence par rapport au signal IQ.

Le signal de référence comporte, sur une durée Ts d'un symbole d'un message Mode S, une première partie sur laquelle ledit signal de référence est de polarité constante, soit positive (> 0) soit négative (< 0), et une seconde partie sur laquelle ledit signal de référence est de polarité constante opposée à la polarité dudit signal de référence sur la première partie. Le signal de référence est de préférence de durée Ts, et l'inversion de polarité entre la première partie et la seconde partie se produit de préférence au milieu de ladite durée Ts.

La forme du signal de référence est telle que le signal corrélé comporte un maximum local ou un minimum local lorsque le signal de référence est synchronisé avec un symbole d'un message Mode S. Par conséquent, la présence d'un message Mode S dans le signal IQ doit en principe entraîner la présence, dans le signal corrélé, de maxima locaux/minima locaux espacés de la durée Ts.

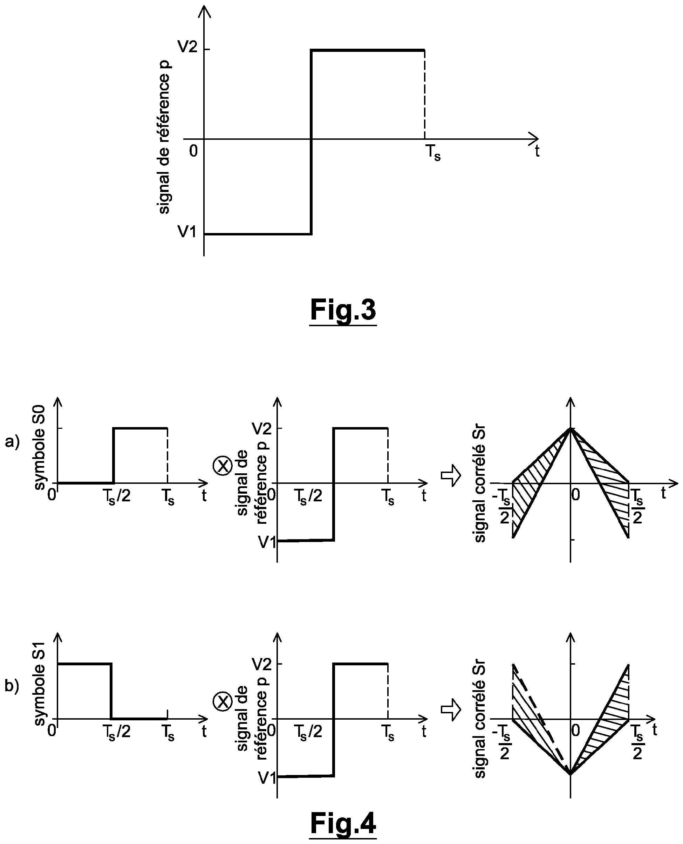

La figure 3 représente schématiquement un exemple de signal de référence particulièrement adapté à la forme des symboles des messages Mode S, permettant d'avoir des maxima locaux/minima locaux particulièrement prononcés dans le signal corrélé.

Tel qu'illustré par la figure 3, le signal de référence est de durée Ts et la première partie et la seconde partie du signal de référence sont sensiblement de même durée égale à Ts/2. En outre, dans cet exemple, le signal de référence est de préférence constant au cours de la première partie, égal à une valeur V1, et est constant au cours de la seconde partie, égal à une valeur V2 telle que V2 = -V1. Dans l'exemple non limitatif illustré par la figure 3, la valeur V1 est négative et la valeur V2 est positive. Par exemple, les valeurs V1 et V2 sont telles que :

$$\left|V1\right| = \left|V2\right| = \frac{1}{\sqrt{OSF}}$$

expression dans laquelle OSF correspond au facteur de sur-échantillonnage par rapport à la durée Ts des symboles des messages Mode S, c'est-à-dire le nombre d'échantillons que comporte le signal IQ par durée Ts. Dans un tel cas, le signal de référence, qui comporte OSF échantillons, est tel que la somme de la puissance de chacun de ses échantillons est égale à un.

La figure 4 représente le résultat de la corrélation entre un symbole de message Mode S en bande de base et le signal de référence.

Plus particulièrement, la partie a) de la figure 4 représente schématiquement :

- un symbole S0 de message Mode S encodant un bit égal à 0,
- le signal de référence p,
- le signal corrélé Sr obtenu par corrélation entre le symbole S0 et le signal de référence p.

Tel qu'illustré par la partie a) de la figure 4, le symbole S0 encodant un bit égal à 0 est, sur la durée Ts (égale à une microseconde pour un message Mode S, c'est-à-dire Ts = 1 μs), nul entre les instants 0 et Ts/2, positif entre les instants Ts/2 et Ts. Le résultat de la corrélation entre le symbole S0 et le signal de référence p, représenté entre -Ts/2 et Ts/2, présente un maximum local positif à l'instant 0 (lorsque le symbole S0 et le signal de référence p sont parfaitement alignés sur la durée Ts). Le signal corrélé Sr diminue de l'instant 0 vers l'instant -Ts/2, vers une valeur nulle si le bit précédent est égal à 1 (voir symbole S1 sur la partie b) de la figure 4) ou vers une valeur négative si le bit précédent est égal à 0. De manière analogue, le signal corrélé Sr diminue de l'instant 0 vers l'instant Ts/2, vers une valeur nulle si le bit suivant est égal à 1 ou vers une valeur négative si le bit suivant est égal à 0.

La partie b) de la figure 4 représente schématiquement :

- un symbole S1 de message Mode S encodant un bit égal à 1,
- le signal de référence p,
- le signal corrélé Sr obtenu par corrélation entre le symbole S1 et le signal de référence p.

Tel qu'illustré par la partie b) de la figure 4, le symbole S1 encodant un bit égal à 1 est, sur la durée Ts, positif entre les instants 0 et Ts/2, nul entre les instants Ts/2 et Ts. Le résultat de la corrélation entre le symbole S1 et le signal de référence p, représenté entre -Ts/2 et Ts/2, présente un minimum local négatif à l'instant 0 (lorsque le symbole S1 et le signal de référence p sont parfaitement alignés sur la durée Ts). Le signal corrélé Sr augmente de l'instant 0 vers l'instant -Ts/2, vers une valeur nulle si le bit précédent est égal à 0 ou vers une valeur positive si le bit précédent est égal à 1. De manière analogue, Le signal corrélé Sr augmente de l'instant 0 vers l'instant Ts/2, vers une valeur nulle si le bit suivant est égal à 0 ou vers une valeur positive si le bit suivant est égal à 1.

Par conséquent, en présence d'un message Mode S dans le signal IQ, le signal corrélé Sr comporte des maxima locaux/minima locaux espacés de la durée Ts des symboles des messages Mode S si le signal IQ a bien été recalé en fréquence et en phase par rapport audit message Mode S. Par exemple, si $t_k$ correspond à l'instant de début de réception du bloc de données (immédiatement après le préambule) d'un message Mode S $S_k$, alors le signal corrélé Sr comporte en principe, s'il a bien été recalé en fréquence et en phase, des maxima locaux/minima locaux aux instants ($t_k$ + m·Ts), m étant un entier positif ou nul. Le signal corrélé Sr peut également comporter des maxima locaux/minima locaux intermédiaires, à certains instants ($t_k$ + m·Ts + Ts/2), en cas de transition entre symboles identiques, c'est-à-dire en cas de transition entre un symbole S0 et un symbole S0, ou en cas de transition entre un symbole S1 et un symbole S1.

Un tel signal corrélé est ainsi calculé pour chaque fréquence candidate considérée et, le cas échéant, pour chaque phase candidate considérée.

### E) Etape 55 de calcul du signal de détection

Le procédé 50 de détection comporte également une étape 55 de calcul de valeurs d'un signal de détection en fonction des différents signaux corrélés calculés.

Le signal de détection comporte, pour chaque fréquence candidate, des valeurs associées respectivement à plusieurs instants candidats différents pour la détection d'un message Mode S. La valeur du signal de détection pour une fréquence candidate et un instant candidat est calculée en fonction de valeurs du signal corrélé obtenues uniquement pour la fréquence candidate considérée et uniquement pour des instants tels que l'écart entre chacun desdits instants et l'instant candidat considéré est un multiple de la durée Ts.

Dans son principe, le calcul du signal de détection vise, pour obtenir la valeur associée à une fréquence candidate $fe_k$ et à un instant candidat $\delta e_k$, à cumuler de manière constructive des valeurs du signal corrélé obtenues pour ladite fréquence candidate $fe_k$ et pour des instants ($\delta e_k$ + m·Ts). Les instants candidats $\delta e_k$ considérés au cours de l'étape 55 de calcul du signal de détection correspondent par exemple aux instants k·Ts/OSF, $0 \leq k \leq$ OSF - 1. Si l'instant candidat $\delta e_k$ correspond, modulo Ts, à l'instant $t_k$ de début de réception d'un bloc de données d'un message Mode S (c'est-à-dire si $t_k = \delta e_k$ + m·Ts), la valeur correspondante du signal de détection atteint en principe un optimum local à partir duquel ledit message Mode S pourra être détecté.

On comprend donc que plusieurs méthodes de calcul peuvent être envisagées pour calculer le signal de détection, et que le choix d'une méthode particulière ne correspond qu'à une variante d'implémentation de l'invention. On décrit ci-après des exemples non limitatifs de méthodes de calcul pouvant être mises en œuvre au cours de l'étape 55 de calcul du signal de détection.

De manière générale, le signal de détection Dtiming, pour une fréquence candidate $fe_k$ et pour un instant candidat $\delta e_k$, se présente de préférence sous la forme suivante :

$$D_{timing}(fe_k, \delta e_k) = B \cdot \sum_{m=0}^{\left\lfloor \frac{Ns}{OSF} - 1 \right\rfloor} (G((re_k \otimes p)[m \cdot OSF + \delta e_k]) + C) \qquad (5)$$

expression dans laquelle :

- $\lfloor x \rfloor$ correspond à la partie entière de x,
- B est un facteur multiplicatif pouvant être égal à 1,
- C est un facteur additif pouvant être égal à 0,
- G(y) est une fonction prédéterminée du paramètre y,
- $re_k \otimes p$ correspond au signal corrélé, c'est-à-dire au résultat de la corrélation du signal IQ recalé $re_k$ par le signal de référence p.

On se place tout d'abord dans le cas où le signal IQ $re_k$ est recalé à la fois en fréquence et en phase en fonction d'une fréquence candidate et d'une phase candidate, selon l'expression (4) ci-dessus, par exemple suite à la détection de fréquences candidates par analyse spectrale du signal IQ. Dans un tel cas, l'expression (5) ci-dessus devient par exemple :

$$D_{timin, fe_k, \varphi e_k}(\delta e_k) =$$

$$\frac{1}{\sqrt{\left\lfloor \frac{Ns}{OSF} \right\rfloor \left(1 - \frac{2}{\pi}\right)}} \cdot \sum_{m=0}^{\left\lfloor \frac{Ns}{OSF} \right\rfloor - 1} \left( \left| real\!\left((re_k \otimes p)[m \cdot OSF + \delta e_k]\right) \right| - \sqrt{\frac{2}{\pi}} \right)$$

$$(6)$$

expression dans laquelle real(x) correspond à la valeur réelle du nombre complexe x.

Dans l'expression (6) ci-dessus, les facteurs B et C permettent, en supposant que le bruit de mesure b[n] est un bruit blanc de moyenne nulle et de variance unitaire, d'assurer que la contribution du bruit au signal de détection $D_{timing}$ est également de moyenne nulle et de variance unitaire.

Dans le cas, par exemple, où les fréquences candidates sont des fréquences choisies arbitrairement sans analyse spectrale du signal IQ, alors il est possible de considérer, pour chaque fréquence candidate, plusieurs phases candidates possibles. Dans un tel cas, le signal IQ $re_k$ recalé est par exemple donné par l'expression (3) ci-dessus, et le signal de détection comporte, pour chaque fréquence candidate $fe_k$ et chaque instant candidat $\delta e_k$ considéré, plusieurs valeurs associées respectivement à différentes phases candidates $\varphi e_k$, calculées par exemple selon l'expression suivante :

$$D_{timing}(fe_k, \delta e_k, \varphi e_k) =$$

$$\frac{1}{\sqrt{\left\lfloor \frac{Ns}{OSF} \right\rfloor \left(1 - \frac{2}{\pi}\right)}} \cdot \sum_{m=0}^{\left\lfloor \frac{Ns}{OSF} \right\rfloor - 1} \left( \left| real\!\left(e^{-j\varphi e_k} \cdot (re_k \otimes p)[m \cdot OSF + \delta e_k]\right) \right| - \sqrt{\frac{2}{\pi}} \right)$$

$$(7)$$

Suivant un autre exemple, il est possible de ne pas considérer de phases candidates et de calculer un signal de détection à partir duquel, lorsqu'un message Mode S sera détecté, il sera possible d'estimer la phase dudit message Mode S détecté. Dans un tel cas, le signal de détection est par exemple calculé selon l'expression suivante :

$$D_{timing}(fe_k, \delta e_k) = \frac{1}{\sqrt{2 \left\lfloor \frac{Ns}{OSF} \right\rfloor}} \cdot \sum_{m=0}^{\left\lfloor \frac{Ns}{OSF} \right\rfloor - 1} \left((re_k \otimes p)[m \cdot OSF + \delta e_k]\right)^2 \quad (8)$$

F) Etape 56 de détection de message Mode S

Ainsi, à l'issue de l'étape 55 de calcul du signal de détection, on dispose de valeurs de signal de détection associées aux différentes fréquences candidates, et pour chaque fréquence candidate, aux différents instants candidats et, le cas échéant, aux différentes phases candidates.

Au cours de l'étape 56 de détection de message Mode S, on évalue les différentes valeurs du signal de détection, et un message Mode S est détecté lorsqu'une valeur du signal de détection vérifie un critère prédéterminé de détection.

Dans le cas où une analyse spectrale du signal IQ a été effectuée au cours de l'étape 52 de sélection de fréquences candidates, on vérifie, pour chaque fréquence candidate susceptible de comporter un message Mode S, si la valeur du signal de détection pour l'un des instants candidats permet de confirmer la détection d'un message Mode S pour la fréquence candidate considérée. Par exemple, le critère de détection peut être considéré comme vérifié par la valeur du signal de détection à un instant candidat $\delta e_k$ si ladite valeur correspond à un maximum local du signal de détection suivant la dimension des instants candidats, et si en outre ladite valeur est supérieure à une valeur seuil prédéterminée.

Dans le cas où les fréquences candidates sont choisies arbitrairement, et dans le cas où plusieurs phases candidates sont considérées, le signal de détection, par exemple donné par l'expression (7) ci-dessus, correspond à une fonction sur un espace tridimensionnel dont les dimensions correspondent respectivement aux fréquences candidates, aux phases candidates et aux instants candidats. Par exemple, le critère de détection peut être considéré comme vérifié par une valeur du signal de détection pour un triplet donné (fréquence candidate, phase candidate, instant candidat) si ladite valeur correspond à un maximum local du signal de détection, et si en outre ladite valeur est supérieure à une valeur seuil prédéterminée. La détection de maximum local du signal de détection met par exemple en œuvre des méthodes conventionnelles de volume (par exemple filtres d'ordre, analyse différentielle (laplacien, hessien), etc.). Lorsque le critère de détection est vérifié pour une valeur du signal de détection, le triplet associé donne les différents paramètres de détection du message Mode S détecté, c'est-à-dire des estimations de la fréquence, de la phase et de l'instant de réception (modulo Ts) dudit message Mode S. Concernant la phase du message Mode S, il est à noter que la phase candidate est ambiguë à π près. Si l'on désigne par φe$_k$ la phase candidate du triplet associé à la valeur du signal de détection pour laquelle le critère de détection a été vérifié, alors l'estimation φd$_k$ de la phase du message Mode S détecté peut être déterminée comme suit :

$$\sum_{n=0}^{Ns-1} real\left(e^{-j\varphi e_k} \cdot re_k[n]\right) > 0$$

- φd$_k$ = φe$_k$ si

- φd$_k$ = φe$_k$ + π sinon.
expression dans laquelle re$_k$ est donné par l'expression (3) ci-dessus.

Dans le cas où les fréquences candidates sont choisies arbitrairement, et dans le cas où le calcul du signal de détection ne tient pas compte de phases candidates, le signal de détection, par exemple donné par l'expression (8) ci-dessus, correspond à une fonction sur un espace bidimensionnel dont les dimensions correspondent respectivement aux fréquences candidates et aux instants candidats. Par exemple, le critère de détection peut être considéré comme vérifié par une valeur du signal de détection pour un couple donné (fréquence candidate, instant candidat) si ladite valeur correspond à un maximum local du signal de détection, et si en outre ladite valeur est supérieure à une valeur seuil prédéterminée. La détection de maximum local du signal de détection met par exemple en œuvre des méthodes conventionnelles de traitement d'image (par exemple filtres d'ordre, analyse différentielle (laplacien, hessien), etc.). Lorsque le critère de détection est vérifié pour une valeur du signal de détection, le couple associé donne les différents paramètres de détection du message Mode S détecté, c'est-à-dire des estimations de la fréquence et de l'instant de réception (modulo Ts) dudit message Mode S. Concernant la phase du message Mode S, celle-ci peut être estimée en fonction de la valeur du signal de détection pour ledit couple. Si l'on désigne par φr$_k$ la phase de la valeur du signal de détection associée audit couple, alors l'estimation φd$_k$ de la phase du message Mode S détecté peut être déterminée comme suit :

$$\sum_{n=0}^{Ns-1} real\left(e^{-\frac{j\varphi r_k}{2}} \cdot re_k[n]\right) > 0$$

φd$_k$ = φr$_k$/2 si

- φd$_k$ = φr$_k$/2 + π sinon.
expression dans laquelle re$_k$ est donné par l'expression (3) ci-dessus.

Ainsi, à l'issue de l'étape 56 de détection, un ou plusieurs messages Mode S peuvent avoir été détectés et, pour chaque message Mode S détecté, on peut également estimer un triplet de paramètres de détection correspondant à des estimations de la fréquence, de la phase et de l'instant de réception (modulo Ts) dudit message Mode S détecté.

Il est à noter que l'instant t$_k$ de début réception d'un bloc de données du message Mode S détecté peut être estimé à partir de l'instant candidat δe$_k$ associé à la valeur du signal de détection pour laquelle le critère de détection a été vérifié. Par exemple, il est possible de corréler le signal IQ, recalé en fréquence et éventuellement en phase, avec le préambule d'un message Mode S, qui est connu a priori, pour plusieurs positions dudit préambule par rapport au signal IQ. Plus particulièrement, les positions considérées correspondent de préférence aux positions (δe$_k$ + m·Ts), et la position qui permet de maximiser la valeur de la corrélation entre ledit signal IQ et ledit préambule correspond à la position du préambule dans le signal IQ, et le bloc de données débute immédiatement ledit préambule.

G) Etape 57 d'extraction de bits de données

L'étape 57 d'extraction vise à extraire les bits des messages Mode S détectés, c'est-à-dire à décoder chacun des messages Mode S détectés.

Plusieurs méthodes d'extraction des bits des messages Mode S détectés peuvent être envisagées, et on comprend que le choix d'une méthode d'extraction particulière ne constitue qu'une variante d'implémentation de l'invention. Notamment, il est possible soit d'extraire séparément les bits des différents messages Mode S détectés, soit d'extraire conjointement lesdits bits des messages mode S détectés.

G.1) Extraction séparée des bits des messages Mode S détectés

Tel qu'indiqué ci-dessus, à l'issue de l'étape 56 de détection, il est possible de disposer, pour chaque message Mode S détecté, d'un triplet de paramètres de détection qui correspondent à des estimations de la fréquence, de la phase et de l'instant de début de réception du bloc de données dudit message Mode S détecté.

Pour chaque message Mode S détecté, il est donc possible de calculer un signal IQ recalé en fréquence et en phase, à l'intérieur duquel on connaît l'instant de début de réception du bloc de données du message Mode S détecté et les instants de transitions entre symboles.

Pour extraire les bits du message Mode S détecté de rang k, pour lequel le triplet de paramètres de détection est $(fd_k, \varphi d_k, td_k)$, on calcule par exemple un signal d'extraction selon l'expression suivante :

$$r_k[n] = \text{real}\left( r[n] \cdot e^{-j \cdot \left( 2\pi fd_k \frac{n}{Fs} + \varphi d_k \right)} \right)$$

Les premiers échantillons des différents symboles du bloc de données du message Mode S détecté correspondent aux échantillons $r_k[td_k + m \cdot OSF]$, m étant un entier positif ou nul. Pour extraire les différents bits, il est par exemple possible de corréler les échantillons du signal d'extraction $r_k$, qui correspondent à un même symbole, avec les symboles S0 et S1 décrits en référence à la figure 4. Par exemple, il est possible de calculer, pour chaque symbole du signal d'extraction $r_k$, des valeurs $C0_k$ et $C1_k$ selon les expressions suivantes :

$$C0_k(m) = \sum_{i=0}^{OSF-1} r_k[td_k + m \cdot OSF + i] \cdot S0[i] = \sum_{i=OSF/2}^{OSF-1} r_k[td_k + m \cdot OSF + i] \cdot S0[i]$$

$$C1_k(m) = \sum_{i=0}^{OSF-1} r_k[td_k + m \cdot OSF + i] \cdot S1[i] = \sum_{i=0}^{OSF/2-1} r_k[td_k + m \cdot OSF + i] \cdot S1[i]$$

Par conséquent, si $C0_k(m)$ est supérieur à $C1_k(m)$ alors le symbole de rang m est considéré comme étant un symbole S0, de sorte qu'un bit égal à 0 est extrait. Dans le cas contraire ($C1_k(m) > C0_k(m)$), le symbole de rang m est considéré comme étant un symbole S1, de sorte qu'un bit égal à 1 est extrait.

Les valeurs $C0_k(m)$ et $C1_k(m)$ peuvent également être utilisées pour calculer une valeur de confiance $Vc_k(m)$ pour le bit extrait pour le symbole de rang m. Par exemple, une telle valeur de confiance $Vc_k(m)$ peut être calculée selon l'expression suivante :

$$Vc_k(m) = |C0_k(m) - C1_k(m)|$$

D'autres méthodes d'extraction séparée de bits peuvent être cependant mises en œuvre, et on comprend que le choix d'une méthode particulière ne constitue qu'une variante d'implémentation de l'invention.

G.2) Extraction conjointe des bits des messages mode S détectés

Dans des modes particuliers de mise en œuvre, l'extraction des bits inclus dans chaque message Mode S détecté est réalisée de manière conjointe pour l'ensemble des messages Mode S détectés, par exemple par une estimation au sens du maximum de vraisemblance (« Joint Maximum Likelihood Sequence Estimation » ou JMLSE dans la littérature anglo-saxonne) ou une estimation au sens des moindres carrés, etc.

En effet, à l'issue de l'étape 56 de détection, on dispose du nombre de messages Mode S présents dans le signal IQ, mais également des différents paramètres de détection pour chaque message Mode S détecté. En estimant par ailleurs, selon toute méthode connue de l'homme de l'art, l'amplitude de chaque message Mode S détecté, il est alors possible de calculer un signal IQ théorique pour chaque combinaison possible de séquences de bits possibles pour les différents messages Mode S détectés. La combinaison de séquences de bits pour les messages Mode S détectés qui permet de maximiser la vraisemblance, ou de minimiser l'écart quadratique moyen entre le signal IQ théorique et le signal IQ obtenu à partir du signal global, donne alors directement tous les bits de tous les messages Mode S détectés.

G.3) Amélioration des performances de l'extraction de bits

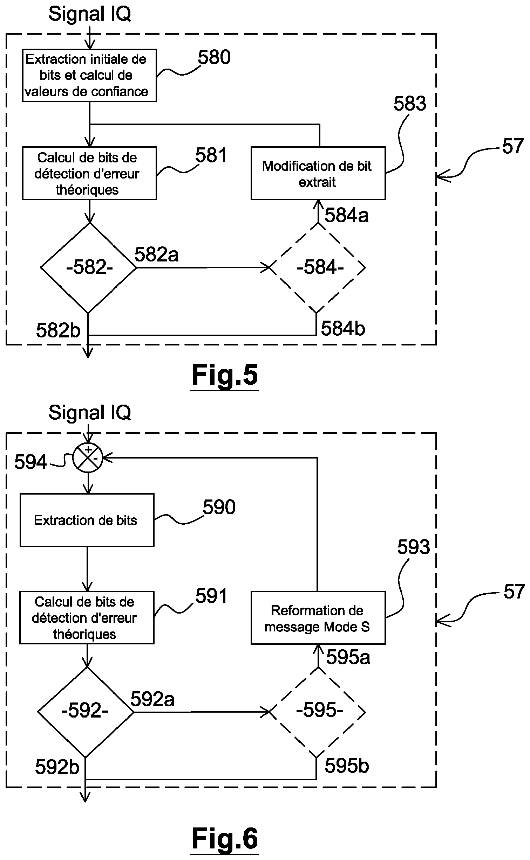

On décrit ci-après, en référence aux figures 5 et 6, deux exemples de méthodes permettant d'améliorer les performances de l'extraction, qui peuvent être considérées seules ou en combinaison. Ces méthodes s'appuient notamment sur le fait que chaque message Mode S comporte des bits de données et des bits de détection d'erreur (« Cyclic Redundancy Check » ou CRC dans la littérature anglo-saxonne).

La figure 5 représente schématiquement les principales étapes d'un mode préféré de mise en œuvre de l'étape 57 d'extraction de bits des messages Mode S détectés, qui s'appuie notamment sur le calcul de valeurs de confiance associées respectivement aux différents bits extraits.

Tel qu'illustré par la figure 5, l'extraction de bits comporte tout d'abord, pour chaque message Mode S détecté, une étape 580 d'extraction initiale de bits, au cours de laquelle on calcule des valeurs de confiance associées respectivement aux différents bits extraits. L'extraction de bits comporte ensuite, pour chaque message Mode S détecté, les étapes suivantes qui sont itérées jusqu'à ce qu'un critère prédéterminé d'arrêt soit vérifié :

- 581 calcul, à partir des bits de données extraits, de bits de détection d'erreur théoriques,
- 582 comparaison des bits de détection d'erreur théoriques avec les bits de détection d'erreur extraits du message Mode S détecté,
- lorsque les bits de détection d'erreur théoriques sont différents des bits de détection d'erreur extraits : 583 modification d'au moins le bit extrait présentant la plus faible valeur de confiance parmi les bits extraits qui n'ont pas encore été modifiés.

L'étape 581 est conventionnelle et vise à calculer des bits de détection d'erreur théoriques à partir des bits de données extraits au niveau du dispositif de détection, selon la même méthode de calcul que celle utilisée à l'émission pour calculer les bits de détection d'erreur inclus dans le message Mode S.

Les bits de détection d'erreur théoriques sont ensuite comparés avec les bits de détection d'erreur extraits du message Mode S détecté, au cours de l'étape 582 de comparaison.

Lorsque les bits de détection d'erreur théoriques sont différents des bits de détection d'erreur extraits du message Mode S détecté considéré (référence 582a sur la figure 5), cela signifie qu'au moins un bit extrait (bit de données ou bit de détection d'erreurs) est erroné. Le cas échéant, la plus faible valeur de confiance calculée est en principe associée au bit extrait qui a le plus de chances d'être celui qui est erroné. En modifiant la valeur du bit extrait ayant la valeur de confiance la plus faible (étape 583 de modification), il est alors possible de calculer à nouveau de bits de détection d'erreur théoriques (étape 581 de calcul) à partir des bits de données extraits, et de les comparer aux bits de détection d'erreur extraits (étape 582 de comparaison) afin de vérifier si cette modification a permis de supprimer les erreurs. Si tel n'est pas le cas, il est possible de modifier la valeur du bit extrait non encore modifié ayant la valeur de confiance la plus faible, et ainsi de suite jusqu'à ce que ce que le critère d'arrêt soit vérifié.

Lorsque, au cours de l'étape 582 de comparaison, les bits de détection d'erreur théoriques sont égaux aux bits de détection d'erreur extraits du message Mode S détecté (référence 582b sur la figure 5), alors les bits extraits sont considérés comme corrects, et le critère d'arrêt est considéré comme vérifié. Dans un tel cas, les bits de données extraits correspondent à ceux, obtenus éventuellement après modification d'un ou de plusieurs desdits bits de données extraits, ayant permis d'obtenir des bits de détection d'erreur théoriques égaux aux bits de détection d'erreur extraits.

De préférence, le critère d'arrêt comporte également un nombre maximal de modifications autorisées, ledit nombre maximal de modifications autorisées étant par exemple inférieur à quinze. Ainsi, dans l'exemple non limitatif illustré par la figure 5, l'étape 57 d'extraction de bits comporte une étape 584 de détermination si le nombre de bits modifiés a atteint le nombre maximal de modifications autorisées. Si c'est le cas (référence 584b sur la figure 5), le critère d'arrêt est vérifié et l'extraction des bits prend fin même s'il est considéré que les bits extraits comportent encore des erreurs. Si le nombre de bits modifiés n'a pas encore atteint le nombre maximal de modifications autorisées (référence 584a sur la figure 5), alors la valeur du bit non encore modifié ayant la valeur de confiance la plus faible est modifiée, et ainsi de suite jusqu'à ce que ce que le critère d'arrêt soit vérifié.

La figure 6 représente schématiquement les principales étapes d'un autre mode préféré de mise en œuvre de l'étape 57 d'extraction de bits des messages Mode S détectés.

Tel qu'illustré par la figure 6, l'extraction de bits comporte les étapes suivantes qui sont itérées jusqu'à ce qu'un critère prédéterminé d'arrêt soit vérifié :

- 590 extraction de bits de données et de bits de détection d'erreur pour chaque message Mode S détecté présent dans le signal IQ,
- 591 calcul, pour chaque message Mode S, de bits de détection d'erreur théoriques à partir des bits de données extraits,
- 592 comparaison, pour chaque message Mode S, des bits de détection d'erreur théoriques avec les bits de détection d'erreur extraits,
- lorsque les bits extraits sont corrects pour au moins un message Mode S et erronés pour au moins un autre message Mode S :

  o 593 reformation de chaque message Mode S pour lequel les bits extraits sont corrects, à partir desdits bits extraits,

  o 594 suppression de chaque message Mode S reformé de sorte à obtenir un signal IQ dépourvu des messages Mode S pour lesquels les bits extraits étaient corrects.

Au cours de l'étape 590, on extrait les bits de données et les bits de détection d'erreur de chaque message Mode S détecté présent dans le signal IQ. Au cours de la première itération, tous les messages Mode S détectés sont encore présents dans le signal IQ. Par contre, au cours d'une seconde itération, le signal IQ ne comporte plus tous les messages Mode S initialement détectés, puisqu'un ou plusieurs messages Mode S ont été supprimés du signal IQ. Par conséquent, à partir de la seconde itération et pour toutes les éventuelles itérations suivantes, l'étape 590 ne porte que sur l'extraction des bits inclus dans les messages Mode S initialement détectés qui n'ont pas encore été reformés et supprimés dans le signal IQ.

Pour chaque message Mode S dont les bits ont été extraits, des bits de détection d'erreur théoriques sont calculés (étape 591 de calcul), à partir des bits de données extraits au niveau du dispositif de détection, et lesdits bits de détection d'erreur théoriques sont comparés (étape 592 de comparaison) avec les bits de détection d'erreur extraits pour le message Mode S considéré.

Lorsque les bits extraits sont corrects pour au moins un message Mode S et erronés pour au moins un autre message Mode S (référence 592a sur la figure 6), alors chaque message Mode S pour lequel les bits extraits sont corrects est reformé (étape 593 de reformation), par le dispositif de détection, selon le protocole de communication Mode S. La reformation du message Mode S tient compte en outre des différents paramètres de détection obtenus pour ce message Mode S, afin d'obtenir un message Mode S reformé qui correspond au message Mode S tel qu'il apparaît théoriquement dans le signal IQ, compte tenu des bits extraits et des différents paramètres de détection. Chaque message Mode S reformé est ensuite soustrait (étape 594 de suppression) au signal IQ. Le signal IQ ainsi obtenu, théoriquement dépourvu des messages Mode S pour lesquels les bits extraits étaient corrects, est ensuite utilisé pour itérer à nouveau les étapes décrites ci-dessus.

Lorsque les bits extraits sont corrects pour tous les messages Mode S initialement détectés dans le signal IQ (référence 592b sur la figure 6), le critère d'arrêt est alors considéré comme vérifié.

De préférence, le critère d'arrêt comporte également un nombre maximal d'itérations autorisées, par exemple inférieur à quinze. Ainsi, dans l'exemple non limitatif illustré par la figure 6, l'étape 57 d'extraction de bits comporte une étape 595 de détermination si le nombre d'itérations effectuées, c'est-à-dire le nombre de suppressions successives de messages Mode S reformés, a atteint le nombre maximal d'itérations autorisées. Si c'est le cas (référence 595b sur la figure 6), le critère d'arrêt est vérifié et l'extraction des bits prend fin même s'il est considéré que les bits extraits comportent encore des erreurs pour certains messages Mode S initialement détectés. Si le nombre d'itérations effectuées n'a pas encore atteint le nombre maximal d'itérations autorisées (référence 595a sur la figure 6), alors il est possible de reformer et de supprimer des messages Mode S si les bits extraits sont corrects pour au moins un message Mode S détecté et erronés pour au moins un autre message Mode S détecté.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement un système de détection de messages Mode S comportant au moins un satellite.

Rien n'exclut, suivant d'autres exemples, d'avoir un système de détection dépourvu de satellites et d'intégrer, dans une station réceptrice au sol, un dispositif de détection de messages Mode S selon l'un quelconque des modes de réalisation de l'invention. En effet, l'invention trouve également une application particulièrement avantageuse dans le cas d'une station réceptrice au sol desservant une zone géographique dense, comme par exemple un aéroport, pour laquelle la probabilité de collision entre messages Mode S peut également être importante.

Il est également possible, suivant d'autres exemples, d'avoir un système de détection comportant à la fois un ou plusieurs satellites, pour la réception de messages Mode S depuis une orbite terrestre, et une ou plusieurs stations réceptrices au sol, pour la réception de messages Mode S au sol sans avoir à passer par l'un des satellites, intégrant un dispositif de détection selon l'un quelconque des modes de réalisation de l'invention.

## Revendications

1. Procédé (50) de détection de messages Mode S dans un signal global mesuré dans une bande de fréquences d'émission de messages Mode S par des aéronefs (40), ledit procédé comportant :

   - l'obtention (51), à partir du signal global, d'un signal comportant deux voies en quadrature de phase, dit « signal IQ », et la sélection (52) d'une ou de plusieurs fréquences candidates pour la détection d'un message Mode S,

   et pour chaque fréquence candidate :

   - le recalage (53) fréquentiel du signal IQ avec un signal de référence en fonction de la fréquence candidate considérée,
   - la corrélation (54) du signal IQ par le signal de référence de sorte à obtenir un signal corrélé pour la fréquence candidate considérée,
   - le calcul (55) de valeurs d'un signal de détection associées respectivement à plusieurs instants candidats pour la détection d'un message Mode S,

   un message Mode S étant détecté (56) lorsqu'une valeur du signal de détection vérifie un critère prédéterminé de détection,
   **caractérisé en ce qu'**en outre, pour chaque fréquence candidate :

   - ledit signal de référence comporte, sur une durée Ts d'un symbole d'un message Mode S, une première partie sur laquelle ledit signal de référence est de polarité constante, et une seconde partie sur laquelle ledit signal de référence est de polarité constante opposée à la polarité dudit signal de référence sur la première partie,
   - on calcule la valeur du signal de détection pour un instant candidat en fonction de valeurs du signal corrélé à des instants tels que l'écart entre chaque instant et l'instant candidat considéré est un multiple de la durée Ts.

2. Procédé (50) selon la revendication 1, dans lequel la sélection (52) de fréquences candidates comporte l'analyse d'un spectre fréquentiel du signal IQ, une fréquence candidate correspondant à une fréquence pour laquelle la valeur du spectre fréquentiel du signal IQ vérifie un critère prédéterminé de détection.

3. Procédé (50) selon l'une des revendications précédentes, comportant un recalage en phase du signal IQ avec le signal de référence en fonction d'au moins une phase candidate pour la détection d'un message Mode S.

4. Procédé (50) selon la revendication 1, dans lequel les fréquences candidates sont des fréquences choisies arbitrairement et le signal de détection correspond à une fonction sur un espace bidimensionnel dont les dimensions correspondent respectivement aux fréquences candidates et aux instants candidats, ou à une fonction sur un espace tridimensionnel dont les dimensions correspondent respectivement aux fréquences candidates, aux instants candidats et à des phases candidates pour la détection d'un message Mode S.

5. Procédé (50) selon l'une des revendications précédentes, dans lequel le signal de référence est constant au cours de la première partie, égal à une valeur V1, et est constant au cours de la seconde partie, égal à une valeur V2 telle que V2 = -V1.

6. Procédé (50) selon l'une des revendications précédentes, dans lequel les messages Mode S à détecter correspondent à des messages 1090 ES.

7. Procédé (50) selon l'une des revendications précédentes, comportant l'extraction (57) de bits inclus dans chaque message Mode S détecté.

8. Procédé (50) selon la revendication 7, dans lequel, chaque message Mode S comportant des bits de données et des bits de détection d'erreur, l'extraction de bits d'un message Mode S détecté comporte une étape (580) d'extraction initiale de bits et de calcul d'une valeur de confiance pour chaque bit de données extrait, et comporte en outre les étapes suivantes qui sont itérées jusqu'à ce qu'un critère prédéterminé d'arrêt soit vérifié :

- (581) calcul, à partir des bits de données extraits, de bits de détection d'erreur théoriques,
- (582) comparaison des bits de détection d'erreur théoriques avec les bits de détection d'erreur extraits du message Mode S détecté,
- lorsque les bits de détection d'erreur théoriques sont différents des bits de détection d'erreur extraits : (583) modification d'au moins le bit extrait présentant la plus faible valeur de confiance parmi les bits extraits qui n'ont pas encore été modifiés.

9. Procédé (50) selon l'une des revendications 7 à 8, dans lequel, chaque message Mode S comportant des bits de données et des bits de détection d'erreur, l'extraction de bits comporte les étapes suivantes qui sont itérées jusqu'à ce qu'un critère prédéterminé d'arrêt soit vérifié :

- (590) extraction de bits pour chaque message Mode S détecté présent dans le signal IQ,
- (591) calcul, pour chaque message Mode S, de bits de détection d'erreur théoriques à partir des bits de données extraits,
- (592) comparaison, pour chaque message Mode S, des bits de détection d'erreur théoriques avec les bits de détection d'erreur extraits, les bits extraits pour un message Mode S étant considérés comme corrects lorsque les bits de détection d'erreur théoriques sont égaux aux bits de détection d'erreur extraits et comme erronés lorsque les bits de détection d'erreur théoriques sont différents des bits de détection d'erreur extraits,
- lorsque les bits extraits sont corrects pour au moins un message Mode S et erronés pour au moins un autre message Mode S :

    o (593) reformation de chaque message Mode S pour lequel les bits extraits sont corrects, à partir desdits bits extraits,
    o (594) suppression de chaque message Mode S reformé de sorte à obtenir un signal IQ dépourvu des messages Mode S pour lesquels les bits extraits sont corrects.

10. Produit programme d'ordinateur **caractérisé en ce qu'**il comporte un ensemble d'instructions de code de programme qui, lorsqu'elles sont exécutées par un processeur, configurent ledit processeur pour mettre en œuvre un procédé (50) de détection de messages Mode S selon l'une des revendications précédentes.

11. Dispositif de détection de messages Mode S dans un signal global mesuré dans une bande de fréquences d'émission de messages Mode S par des aéronefs (40), **caractérisé en ce qu'**il comporte des moyens configurés pour mettre en œuvre les étapes d'un procédé (50) de détection selon l'une des revendications 1 à 9.

12. Satellite (20) comportant un dispositif de mesure d'un signal global mesuré dans une bande de fréquences d'émission de messages Mode S par des aéronefs (40), **caractérisé en ce qu'**il comporte un dispositif de détection de messages Mode S selon la revendication 11.

13. Système (10) de détection de messages Mode S, comportant un satellite (20) comportant un dispositif de mesure d'un signal global mesuré dans une bande de fréquences d'émission de messages Mode S par des aéronefs (40), **caractérisé en ce que** ledit système comporte des moyens, répartis entre ledit satellite (20) et une ou plusieurs stations (30) de traitement au sol, configurés pour mettre en œuvre les étapes d'un procédé (50) de détection selon l'une des revendications 1 à 9.


**Patentansprüche**

1. Verfahren (50) zum Erkennen von Mode-S-Nachrichten in einem Gesamtsignal, das in einem Frequenzband zum Senden von Mode-S-Nachrichten durch Flugzeuge (40) gemessen wird, wobei das Verfahren umfasst:

- Erhalten (51), auf Grundlage des Gesamtsignals, eines als IQ-Signal bezeichneten Signals, das zwei Kanäle in Phasenquadratur umfasst, und Auswählen (52) einer oder mehrerer Kandidatenfrequenzen für das Erkennen einer Mode-S-Nachricht,

und bei jeder Kandidatenfrequenz:

- Frequenzabgleich (53) des IQ-Signals mit einem Referenzsignal in Abhängigkeit von der betrachteten Kandidatenfrequenz,
- Korrelieren (54) des IQ-Signals mit dem Referenzsignal, um ein korreliertes Signal für die betrachtete Kandidatenfrequenz zu erhalten,
- Berechnen (55) von Werten eines Erkennungssignals, die jeweils mit mehreren Kandidatenzeitpunkten für die Erkennung einer Mode-S-Nachricht verknüpft sind,

wobei eine Mode-S-Nachricht erkannt (56) wird, wenn ein Wert des Erkennungssignals ein vorbestimmtes Erkennungskriterium erfüllt,
**dadurch gekennzeichnet, dass** bei jeder Kandidatenfrequenz weiter:

- das Referenzsignal in einer Dauer Ts eines Symbols einer Mode-S-Nachricht einen ersten Teil umfasst, in dem das Referenzsignal von konstanter Polarität ist, und einen zweiten Teil, in dem das Referenzsignal von konstanter, der Polarität des Referenzsignals im ersten Teil entgegengesetzter Polarität ist,
- der Wert des Erkennungssignals bei einem Kandidatenzeitpunkt in Abhängigkeit von Werten des korrelierten Signals zu solchen Zeitpunkten berechnet wird, dass der Abstand zwischen jedem Zeitpunkt und dem betrachteten Kandidatenzeitpunkt ein Vielfaches der Dauer Ts ist.

2. Verfahren (50) nach Anspruch 1, wobei das Auswählen (52) von Kandidatenfrequenzen das Analysieren eines Frequenzspektrums des IQ-Signals umfasst, wobei eine Kandidatenfrequenz einer Frequenz entspricht, bei der der Wert des Frequenzspektrums des IQ-Signals ein vorbestimmtes Erkennungskriterium erfüllt.

3. Verfahren (50) nach einem der vorstehenden Ansprüche, das einen Phasenabgleich des IQ-Signals mit dem Referenzsignal in Abhängigkeit von mindestens einer Kandidatenphase für das Erkennen einer Mode-S-Nachricht umfasst.

4. Verfahren (50) nach Anspruch 1, wobei es sich bei den Kandidatenfrequenzen um willkürlich gewählte Frequenzen handelt und das Erkennungssignal einer Funktion in einem zweidimensionalen Raum entspricht, dessen Dimensionen jeweils den Kandidatenfrequenzen und den Kandidatenzeitpunkten entsprechen, oder einer Funktion in einem dreidimensionalen Raum, dessen Dimensionen jeweils den Kandidatenfrequenzen, den Kandidatenzeitpunkten und Kandidatenphasen für das Erkennen einer Mode-S-Nachricht entsprechen.

5. Verfahren (50) nach einem der vorstehenden Ansprüche, wobei das Referenzsignal während des ersten Teils konstant, gleich einem Wert V1 ist, und während des zweiten Teils konstant, gleich einem Wert V2 ist, sodass V2 = -V1.

6. Verfahren (50) nach einem der vorstehenden Ansprüche, wobei die Mode-S-Nachrichten, die erkannt werden sollen, 1090-ES-Nachrichten entsprechen.

7. Verfahren (50) nach einem der vorstehenden Ansprüche, das das Extrahieren (57) von Bits umfasst, die in jeder erkannten Mode-S-Nachricht eingeschlossen sind.

8. Verfahren (50) nach Anspruch 7, wobei, wenn jede Mode-S-Nachricht Datenbits und Fehlererkennungsbits umfasst, das Extrahieren von Bits einer erkannten Mode-S-Nachricht einen Schritt (580) des anfänglichen Extrahierens von Bits und des Berechnens eines Konfidenzwerts für jedes extrahierte Datenbit umfasst, und weiter die folgenden Schritte umfasst, die wiederholt werden, bis ein vorbestimmtes Stoppkriterium erfüllt ist:

- (581) Berechnen von theoretischen Fehlererkennungsbits auf Grundlage der extrahierten Datenbits,
- (582) Vergleichen der theoretischen Fehlererkennungsbits mit den aus der erkannten Mode-S-Nachricht extrahierten Fehlererkennungsbits,
- wenn sich die theoretischen Fehlererkennungsbits von den extrahierten Fehlererkennungsbits unterscheiden: (583) Modifizieren mindestens des extrahierten Bits, das unter den extrahierten Bits, die noch nicht modifiziert wurden, den niedrigsten Konfidenzwert aufweist.

9. Verfahren (50) nach einem der Ansprüche 7 bis 8, wobei, wenn jede Mode-S-Nachricht Datenbits und Fehlererkennungsbits umfasst, das Extrahieren von Bits die folgenden Schritte umfasst, die wiederholt werden, bis ein vorbestimmtes Stoppkriterium erfüllt ist:

- (590) Extrahieren von Bits bei jeder erkannten Mode-S-Nachricht, die im IQ-Signal vorliegt,
- (591) Berechnen von theoretischen Fehlererkennungsbits für jede Mode-S-Nachricht auf Grundlage der extrahierten Datenbits,
- (592) Vergleichen der theoretischen Fehlererkennungsbits bei jeder Mode-S-Nachricht mit den extrahierten Fehlererkennungsbits, wobei die extrahierten Bits bei einer Mode-S-Nachricht als richtig erachtet werden, wenn die theoretischen Fehlererkennungsbits gleich den extrahierten Fehlererkennungsbits sind, und als falsch, wenn sich die theoretischen Fehlererkennungsbits von den extrahierten Fehlererkennungsbits unterscheiden,
- wenn die extrahierten Bits bei mindestens einer Mode-S-Nachricht richtig und bei mindestens einer anderen Mode-S-Nachricht falsch sind:

-- (593) Umbilden jeder Mode-S-Nachricht, bei der die extrahierten Bits richtig sind, auf Grundlage der extrahierten Bits,
-- (594) Unterdrücken jeder umgebildeten Mode-S-Nachricht, um ein IQ-Signal ohne die Mode-S-Nachrichten, bei denen die extrahierten Bits richtig sind, zu erhalten.

10. Computerprogrammprodukt, **dadurch gekennzeichnet, dass** es einen Satz Programmcodeanweisungen umfasst, die, wenn sie von einem Prozessor ausgeführt werden, den Prozessor so konfigurieren, dass er ein Verfahren (50) zum Erkennen von Mode-S-Nachrichten nach einem der vorstehenden Ansprüche umsetzt.

11. Vorrichtung zum Erkennen von Mode-S-Nachrichten in einem Gesamtsignal, das in einem Frequenzband zum Senden von Mode-S-Nachrichten durch Flugzeuge (40) gemessen wird, **dadurch gekennzeichnet, dass** sie Mittel umfasst, die so konfiguriert sind, dass sie die Schritte eines Erkennungsverfahrens (50) nach einem der Ansprüche 1 bis 9 umsetzen.

12. Satellit (20), der eine Vorrichtung zum Messen eines Gesamtsignals umfasst, das in einem Frequenzband zum Senden von Mode-S-Nachrichten durch Flugzeuge (40) gemessen wird, **dadurch gekennzeichnet, dass** er eine Vorrichtung zum Erkennen von Mode-S-Nachrichten nach Anspruch 11 umfasst.

13. System (10) zum Erkennen von Mode-S-Nachrichten, das einen Satelliten (20) umfasst, der eine Vorrichtung zum Messen eines Gesamtsignals umfasst, das in einem Frequenzband zum Senden von Mode-S-Nachrichten durch Flugzeuge (40) gemessen wird, **dadurch gekennzeichnet, dass** das System zwischen dem Satelliten (20) und einer oder mehreren Verarbeitungsstationen (30) am Boden verteilte Mittel umfasst, die so konfiguriert sind, dass sie die Schritte eines Erkennungsverfahrens (50) nach einem der Ansprüche 1 bis 9 umsetzen.

## Claims

1. Method (50) for detecting Mode S messages in a global signal measured in a frequency band for transmitting Mode S messages by aircraft (40), said method including:

- obtaining (51), from the global signal, a signal including two channels in phase quadrature, referred to as "IQ signal", and selecting (52) one or more candidate frequencies for detecting a Mode S message,

and, for each candidate frequency:

- calibrating (53) the frequency of the IQ signal with a reference signal according to the candidate frequency in question,
- correlating (54) the IQ signal by the reference signal so as to obtain a correlated signal for the candidate frequency in question,
- calculating (55) values of a detection signal associated respectively with a plurality of candidate instants for detecting a Mode S message,

a Mode S message being detected (56) when a value of the detection signal satisfies a predetermined detection criterion,
**characterised in that** furthermore, for each candidate frequency:

- said reference signal includes, over a duration Ts of a symbol of a Mode S message, a first part on which said reference signal has a constant polarity, and a second part on which said reference signal has a constant polarity opposite to the polarity of said reference signal on the first part,
- the value of the detection signal is calculated for a candidate instant according to values of the correlated signal at instants such that the separation between each instant and the candidate instant in question is a multiple of the duration Ts.

2. Method (50) according to claim 1, wherein selecting (52) candidate frequencies includes analysing a frequency spectrum of the IQ signal, a candidate frequency corresponding to a frequency for which the value of the frequency spectrum of the IQ signal satisfies a predetermined detection criterion.

3. Method (50) according to one of the preceding claims, including a phase calibration of the IQ signal with the reference signal according to at least one candidate phase for detecting a Mode S message.

4. Method (50) according to claim 1, wherein the candidate frequencies are frequencies chosen arbitrarily and the detection signal corresponds to a function on a two-dimensional space the dimensions of which correspond respectively to the candidate frequencies and to the candidate instants, or to a function on a three-dimensional space the dimensions of which correspond respectively to the candidate frequencies, to the candidate instants and to candidate phases for detecting a mode S message.

5. Method (50) according to one of the preceding claims, wherein the reference signal is constant during the first part, equal to a value V1, and is constant during the second part, equal to a value V2 such that V2 = -V1.

6. Method (50) according to one of the preceding claims, wherein the Mode S messages to be detected correspond to 1090 ES messages.

7. Method (50) according to one of the preceding claims, including the extraction (57) of bits included in each Mode S message detected.

8. Method (50) according to claim 7, wherein, each Mode S message including data bits and error detection bits, extracting bits of a Mode S message detected includes a step (580) of initial extraction of bits and calculating a confidence value for each data bit extracted, and furthermore includes the following steps that are iterated until a predetermined stop criterion is satisfied:

- (581) calculating, from the extracted data bits, theoretical error detection bits,
- (582) comparing the theoretical error detection bits with the error detection bits extracted from the Mode S message detected,
- when the theoretical error detection bits are different from the extracted error detection bits: (583) modifying at least the extracted bit having the lowest confidence value among the extracted bits that have not yet been modified.

9. Method (50) according to one of claims 7 to 8, wherein, each Mode S message including data bits and error detection bits, extracting bits includes the following steps that are iterated until a predetermined stop criterion is satisfied:

- (590) extracting bits for each detected Mode S message present in the IQ signal,
- (591) calculating, for each Mode S message, theoretical error detection bits from the extracted data bits,
- (592) comparing, for each Mode S message, theoretical error detection bits with the extracted error detection bits, the bits extracted for a Mode S message being considered to be correct when the theoretical error detection bits are equal to the extracted error detection bits and to be erroneous when the theoretical error detection bits are different from the extracted error detection bits,
- when the extracted bits are correct for at least one Mode S message and erroneous for at least one other Mode S message:

o (593) re-forming each Mode S message for which the extracted bits are correct, from said extracted bits,
o (594) deleting each re-formed Mode S message so as to obtain an IQ signal devoid of Mode S messages for which the extracted bits are correct.

10. Computer program product, **characterised in that** it includes a set of program code instructions which, when they are executed by a processor, configure said processor to implement a method (50) for detecting Mode S messages according to one of the preceding claims.

**11.** Device for detecting Mode S messages in a global signal measured in a frequency band for transmitting Mode S messages by aircraft (40), **characterised in that** it includes means configured to implement the steps of a method (50) for detecting according to one of claims 1 to 9.

**12.** Satellite (20) including a device for measuring a global signal measured in a frequency band for transmitting Mode S messages by aircraft (40), **characterised in that** it includes a device for detecting Mode S messages according to claim 11.

**13.** System (10) for detecting Mode S messages, including a satellite (20) including a device for measuring a global signal measured in a frequency band for transmitting Mode S messages by aircraft (40), **characterised in that** said system includes means, distributed between said satellite (20) and one or more ground processing stations (30), configured to implement the steps of a method (50) for detecting according to one of claims 1 to 9.

**Fig.1**

| | |
|---|---|
| Obtention d'un signal IQ | 51 |
| Sélection de fréquences candidates | 52 |
| Recalage fréquentiel du signal IQ | 53 |
| Corrélation avec un signal de référence | 54 |
| Calcul d'un signal de détection | 55 |
| Détection de messages Mode S | 56 |
| Extraction de bits des messages Mode S détectés | 57 |

50

**Fig.2**

**Fig.3**

**Fig.4**

Signal IQ

Extraction initiale de bits et calcul de valeurs de confiance — 580

Calcul de bits de détection d'erreur théoriques — 581

Modification de bit extrait — 583

57

584a

-582- 582a

-584-

582b

584b

**Fig.5**

Signal IQ

594 ⊗

Extraction de bits — 590

Calcul de bits de détection d'erreur théoriques — 591

Reformation de message Mode S — 593

57

595a

-592- 592a

-595-

592b

595b

**Fig.6**

**EP 3 446 149 B1**

**RÉFÉRENCES CITÉES DANS LA DESCRIPTION**

**Documents brevets cités dans la description**

- WO 2005085898 A
- EP 2738972 A2